# EUROPÄISCHE PATENTANMELDUNG

(11) **EP 1 463 358 A1**
(43) Veröffentlichungstag der Anmeldung: **29.09.2004**
(21) Anmeldenummer: 03007148.4
(22) Anmeldetag: 28.03.2003
(51) Int. Cl.: H04Q 7/38, H04Q 7/36

(54) **Verfahren und Basisstation zur MBMS-Datenübertragung**

(71) Anmelder: SIEMENS AKTIENGESELLSCHAFT, 80333 München (DE)
(72) Erfinder: Färber, Michael, 82515 Wolfratshausen (DE)

(57) **Zusammenfassung**

Die Erfindung betrifft ein Verfahren zur MBMS-Datenübertragung mit Hilfe eines Zeitschlitzvielfachzugriffsverfahren in einer Abwärtsstrecke von einer Basisstation zu Teilnehmern eines Funkkommunikationssystems. Zur Datenübertragung werden einer Trägerfrequenz zugeordnete Zeitschlitze eines wiederkehrenden Rahmens verwendet. Zum Rundsenden von Systeminformationen wird seitens der Basisstation ein exklusiv zugeordneter erster Zeitschlitz einer zugeordneten ersten Trägerfrequenz verwendet, wobei zur MBMS-Datenübertragung ein zweiter Zeitschlitz der ersten Trägerfrequenz verwendet wird. Erfindungsgemäß wird zur MBMS-Datenübertragung zusätzlich der zweite Zeitschlitz von mindestens einer weiteren Trägerfrequenz verwendet, wobei die erste und die mindestens eine weitere Trägerfrequenz rahmenweise wechselnd mittels Frequenzsprungverfahren geändert werden.

## Beschreibung

Die Erfindung betrifft ein Verfahren zur MBMS-Datenübertragung gemäß den Merkmalen des Oberbegriffs des Patentanspruchs 1 sowie einer Basisstation zur Durchführung des Verfahrens gemäß Patentanspruch 10.

Bei Funkkommunikationssystemen, wie beispielsweise beim GSM/GERAN-Mobilfunksystem, werden sogenannte Multimedia-Broadcast-Multicast-Dienste als MBMS-Datendienste eingeführt bzw. angeboten. Dabei handelt es sich um eine an eine große Teilnehmeranzahl gerichtete und im allgemeinen kostenpflichtige Datenübertragung, wie beispielsweise Fußball-, Video- oder Nachrichtenübertragungen.

Ein derartiger MBMS-Datendienst wird als "PayView"-Angebot im Rahmen einer Point-to-Multipoint-Verbindung lediglich in einer Abwärtsrichtung, im sogenannten Downlink, von einer Basisstation an alle Teilnehmer einer Benutzergruppe funkübertragen. Eine individuelle Übertragung an einen einzelnen Teilnehmer mit Hilfe von dem einzelnen Teilnehmer exklusiv zugeordneten Funkübertragungsressourcen findet in der Regel nicht statt.

Der sendenden Basisstation ist im allgemeinen bei einer MBMS-Datenübertragung nicht bekannt, wo sich einzelne Teilnehmer innerhalb einer von der Basisstation versorgten Funkzelle befinden. Um auch Teilnehmer am Funkzellenrand sicher versorgen zu können, wird die MBMS-Datenübertragung mit einer maximalen Sendeleistung von der Basisstation abgestrahlt.

Für eine MBMS-Datenübertragung werden somit gleiche Anforderungen, wie beispielsweise im GSM/GERAN-Mobilfunksystem, an den dort zur BCCH-Datenübertragung verwendeten Zeitschlitz einer zur BCCH-Datenübertragung exklusiv zugeordneten Trägerfrequenz gestellt.

Eine MBMS-Datenübertragung mit Hilfe von weiteren Zeitschlitzen der zur BCCH-Datenübertragung verwendeten Trägerfrequenz ist jedoch nicht ohne weiteres realisierbar. Gemäß dem Standard 3GPP TS 45.008 V4.6.0 (2001-11) werden nämlich derartige Zeitschlitze der BCCH-Trägerfrequenz für eine Übertragung sogenannter Dummy-Bursts mit hoher Sendeleistung verwendet. Mit Hilfe der Dummy-Bursts wird bei einem GSM/GERAN-Mobilfunksystem ein zeitlich unsynchronisiertes Überwachen ("Monitoring") benachbarter Funkzellen seitens einer Mobilstation gewährleistet.

Werden oben genannte MBMS-Datendienste nachträglich in ein bereits betriebenes Mobilfunksystem eingeführt, so werden aufgrund der zur sicheren Versorgung notwendigen, konstant zu sendend hohen Sendeleistungen neben Intercell-Interferenzen zusätzlich auch Intracell-Interferenzen in den Funkzellen des Mobilfunksystems verursacht.

Es ist daher Aufgabe der vorliegenden Erfindung, eine MBMS-Datenübertragung unter Beachtung einer sicheren Versorgung von Teilnehmern und unter Beachtung geringer zusätzlicher Interferenzstörungen bei einem Funkkommunikationssystem zu realisieren.

Diese Aufgabe der Erfindung wird bezüglich eines Verfahrens durch die Merkmale des Patentanspruchs 1 und bezüglich einer Basisstation durch die Merkmale des Patentanspruchs 10 gelöst. Vorteilhafte Weiterbildungen sind in den Unteransprüchen angegeben.

Mit Hilfe des erfindungsgemäßen Verfahrens werden gegenüber der alleinigen Benutzung einer einzelnen Trägerfrequenz zur Übertragung eines MBMS-Datendienstes mehrere Vorteile erzielt, die anhand eines beispielhaften GSM/Geran-Mobilfunksystems nachfolgend erläutert werden.

Durch die Verwendung eines Zeitschlitzes der zur BCCH-Datenübertragung verwendeten Trägerfrequenz für eine neu einzuführende MBMS-Datenübertragung wird ein Nachbarzellen-Monitoring nach wie vor ermöglicht, da auch die MBMS-Datenübertragung mit einer zellspezifischen maximalen Sendeleistung übertragen werden muss.

Durch Mehrwegeausbreitung verursachte Funkfeldauslöschungen bzw. Funkfelddämpfungen, die bei einer ausschließlichen Verwendung nur einer Trägerfrequenz zur MBMS-Datenübertragung entstehen würden, werden durch das Frequenzsprungverfahren (Frequency-Hopping) bei der MBMS-Datenübertragung reduziert.

Das erfindungsgemäße Verfahren ist bei einem niedrigen Frequenzwiederholungsfaktor (Frequency-Reuse-Factor) bevorzugt einsetzbar. Durch das Frequenzsprungverfahren werden lediglich geringe zusätzliche ernsthafte Interferenzstörungen bei einer begrenzten Anzahl von Trägerfrequenzen in einem Mobilfunksystem verursacht. Diese Interferenzstörungen sind jedoch beispielsweise mittels Fehlerkorrekturverfahren empfangsseitig kompensierbar, bzw. im zeitlichen Mittel als vernachlässigbar zu betrachten.

Durch den systembedingt eingeführten Frequency-Reuse-Factor der BCCH-Trägerfrequenzen, der derart gewählt wurde, dass lediglich geringe Interferenzen durch die BCCH-Trägerfrequenzen verursacht werden, wirkt sich der für eine MBMS-Datenübertragung gewählte Zeitschlitz der BCCH-Trägerfrequenz ebenfalls wenig störend aus.

Eine Einführung des erfindungsgemäßen Verfahrens zur MBMS-Datenübertragung in bereits realisierte, sich in Betrieb befindliche Mobilfunksysteme ist aus oben genannten Gründen leicht möglich. Insbesondere gilt dies für derzeitige GSM/GERAN-Mobilfunksysteme.

Ist an einem Standort eines Teilnehmers die gemeinsam zur BCCH-Datenübertragung und zur MBMS-Datenübertragung verwendete Trägerfrequenz lediglich mit Qualitätseinbußen zu empfangen, so stehen dem Teilnehmer aufgrund des erfindungsgemäßen Verfahrens stets ausreichend MBMS-Daten für ein empfangsseitig durchzuführendes Fehlerkorrekturverfahren zur Verfügung.

Eine "robuste" und störunanfälligere Kodierung der MBMS-Datenübertragung, wie sie beispielsweise zur BCCH-Datenübertragung verwendet wird, ist aus diesem Grund nicht nötig, wodurch vorteilhaft eine hohe Datenübertragungsrate bei der MBMS-Datenübertragung erreicht wird.

Die vorliegende Erfindung basiert auf einer Kombination aus einer sogenannten "Baseband-Frequency-Hopping"-Implementierung und aus einer sogenannten "Synthesiser-Frequency-Hopping"-Implementierung. Dadurch stehen entsprechend einer Anzahl an Trägereinheiten (Carrier-Unit) einer Basisstation eine entsprechende Anzahl an Trägerfrequenzen zur Durchführung einer MBMS-Datenübertragung zur Verfügung.

Aus den Standards ist neben dem sogenannten zyklischen noch das zufällige Frequenzsprungverfahren bekannt. Dabei wird aus einem vorgegebenen Trägerfrequenzvorrat eine Frequenzabfolge für das anzuwendende Frequenzsprungverfahren erzeugt.

Bei einem zyklischen Frequenzsprungverfahren wird diese Frequenzabfolge stets unverändert wiederholt, so dass sich ein gleichbleibendes Frequenzsprungmuster ergibt.

Beim zufälligen Frequenzsprungverfahren wird die Frequenzabfolge nach einem Durchlauf anhand einer langkettigen Zufallsgenerierung zufällig von neuem zusammengestellt. Nach einem Durchlauf der Frequenzabfolge ändert sich somit das Frequenzsprungmuster. Bei beiden Frequenzsprungverfahren werden die Frequenzabfolgen "orthogonal" zueinander gewählt, so dass in einer Frequenzabfolge jede Trägerfrequenz nur einmal verwendet wird.

Beim erfindungsgemäße Verfahren wird in einer bevorzugten Ausführungsform das zufällige Frequenzsprungverfahren verwendet, da dieses eine vorteilhafte Streuung von Interferenzen verursacht.

Jedoch ist auch eine Verwendung des zyklischen Frequenzsprungverfahrens beim erfindungsgemäßen Verfahren möglich, wobei deterministische Effekte zu einer Verringerung eines erzielbaren Frequenzsprung-Gewinnes führen. Andererseits erlaubt das zyklische Frequenzsprungverfahren in einem Spezialfall eine Verwendung des Synthesizer-Frequency-Hoppings für alle Trägerfrequenzen und damit auch für die BCCH-Trägerfrequenz.

Eine dazu verwendete Frequenzabfolge ist dabei so beschaffen, dass ein BCCH-Zeitschlitz mit einer vorbestimmten BCCH-Trägerfrequenz stets bedient wird. Aus Sicht einer Mobilstation würde dies dann als kontinuierliche Trägerfrequenz gewertet werden. Bei denjenigen Frequenzabfolgen, die einem BCCH-Zeitschlitz zugeordnet sind, muss sichergestellt sein, dass die BCCH-Trägerfrequenz genau auf dem BCCH-Zeitschlitz aktiv ist. Damit wird vergleichend zum Baseband-Frequency-Hopping ein für die Frequenzabfolge zulässiger Frequenzvorrat durch die Anzahl der installierten Träger (Carrier-Units) einer Basisstation bestimmt. Längere Frequenzabfolgen sind hier nicht realisierbar, da innerhalb einer einzelnen Frequenzabfolge eine Trägerfrequenz nicht zweimal verwendet werden darf. Ein zyklisches Synthesizer-Frequency-Hopping bildet eine Baseband-Frequency-Hopping-Implementierung nach, unter den oben genannten Einschränkungen.

Durch die bevorzugte Verwendung des zufälligen Frequenzsprungverfahren lässt sich auf den nicht mit MBMS-Daten belegten Zeitschlitzen der Trägerfrequenzen ein Frequenzsprungverfahren durchführen, das einen Frequenzvorrat nutzt, der größer als eine Anzahl installierter Trägereinheiten (Carrier-Units CU) der Basisstation ist. Dabei werden die zusätzlichen Interferenz im System auf bestimmte Frequenzen limitiert, die vorteilhafterweise die BCCH-Trägerfrequenz beinhalten.

Bei einer "Baseband-Frequency-Hopping"-Implementierung sind beispielsweise einer GSM/GERAN-Basisstation eine Anzahl sogenannter "Carrier Units" CU als Trägereinheiten zugeordnet, von denen jede einzelne jeweils eine Trägerfrequenz zur Verfügung stellt. Im Basisband erfolgt eine zeitschlitzweise Umschaltung eines zu übertragenden Datenverkehrs auf die einzelnen "Carrier Units" CU und damit eine entsprechende Zuordnung zu den einzelnen Trägerfrequenzen. Hierbei ist der Frequenzvorrat für das einzusetzende Frequenzsprungverfahren durch die Anzahl der vorhandenen Carrier-Units CU einer Basisstation bestimmt.

Standardgemäß wird dabei ein erster Zeitschlitz TS0 einer fest zugeordneten Trägerfrequenz innerhalb einer Funkzelle zur ausschließlichen BCCH-Datenübertragung verwendet. Bei einer standardgemäßen Implementierung eines Synthesizer-Frequency-Hopping nimmt die BCCH-Datenübertragung nicht am Frequenzsprungverfahren teil. Weitere der BCCH-Trägerfrequenz zugeordnete Zeitschlitze übertragen gemäß dem Standard Verkehrs- oder Dummy-Bursts, sind aber ebenfalls vom Frequenzsprungverfahren ausgeschlossen.

Bei der "Synthesiser-Frequency-Hopping"-Implementierung wird jeder "Carrier-Unit" CU einer Basisstation jeweils ein Frequenzvorrat zur Datenübertragung zugeordnet. Dabei erfolgt eine zeitschlitzweise durchgeführte Trägerfrequenzänderung innerhalb einer jeden "Carrier-Unit" CU, wobei eine zeitlich durchgeführte Umstimmung der "Carrier-Unit" auf eine neue Trägerfrequenz mittels mehrerer Synthesizer pro "Carrier-Unit" CU durchgeführt wird.

Im einzelnen wählt eine "Carrier-Unit" aus einem der Basisstation zugeordneten Frequenzband eine Trägerfrequenz aus, die zeitschlitzweise geändert wird. Während Informationsdaten eines ersten Zeitschlitzes über eine "Carrier-Unit" mittels ausgewählter Trägerfrequenz abgestrahlt werden, hat ein Synthesizer Zeit, sich für einen nachfolgenden Zeitschlitz auf eine neue Trägerfrequenz zur Informationsdatenübertragung abzustimmen.

Die Frequenzabfolge ("Hopping-Sequence") leitet sich aus einer individuellen Hopping-Sequence-Anzahl unter Berücksichtigung eines sogenannten "Mobile Allocation Offset" ab.

Die BCCH-Trägerfrequenz nimmt nicht am Frequenzsprungverfahren teil. Dadurch sind alle mittels BCCH-Trägerfrequenz durchgeführten Datenübertragungen gegenüber Interferenzen und gegenüber Funkfeldeinflüssen empfindlicher. Aus diesem Grund erhalten Signalisierungskanäle eine höhere Redundanz in der Kodierung, während Datenübertragungen, die auf einem verfügbaren Zeitschlitz der BCCH-Trägerfrequenz durchgeführt werden, mit Hilfe eines Intrazell-Handover-Mechanismus gegebenenfalls geschützt werden. Dadurch werden bei Bedarf qualitativ schlechte Datenübertragungen auf einen geeigneteren Hopping-Träger verlagert.

Mit Hilfe des erfindungsgemäßen Verfahren sind optimierte "Frequency-Reuse-Pattern" für MBMS-Dienste realisierbar.

Im Folgenden wird die Erfindung anhand einer Zeichnung näher erläutert. Dabei zeigt:
- FIG 1: Trägereinheiten C0 bis C3 einer GSM/GERAN-Basisstation zur Durchführung einer erfindungsgemäßen MBMS-Datenübertragung, und
- FIG 2: eine bezüglich der Interferenzen optimierte Trägerfrequenzzuteilung zu Funkzellen eines Mobilfunksystems zur Durchführung des erfindungsgemäßen Verfahrens.

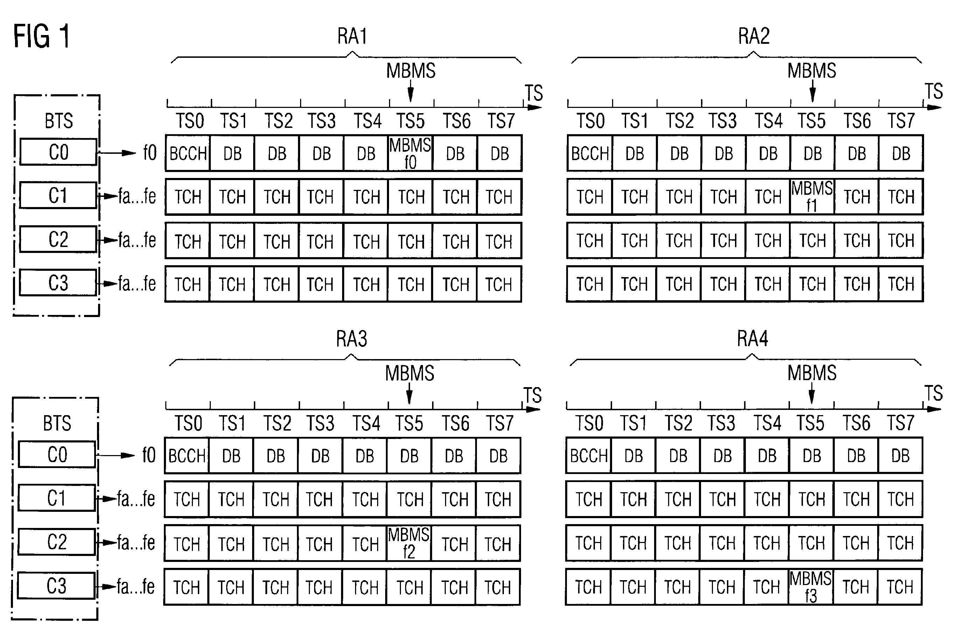

FIG 1 zeigt vier Trägereinheiten C0 bis C3 einer GSM/GERAN-Basisstation BTS zur Durchführung einer erfindungsgemäßen MBMS-Datenübertragung.

Eine erste Trägereinheit C0 stellt eine erste Trägerfrequenz f0 bereit, deren erster Zeitschlitz TS0 eines periodisch wiederkehrenden Rahmens zur ausschließlichen BCCH-Datenübertragung BCCH im Downlink von der Basisstation BTS zu Teilnehmern bzw. Mobilstationen verwendet wird. Zusätzlich wird ein weiterer Zeitschlitz TS5 der ersten Trägerfrequenz f0 zur MBMS-Datenübertragung MBMS verwendet. Zeitschlitze TS1 bis TS4 sowie TS6 und TS7 der ersten Trägerfrequenz f0 werden zur Übertragung von Daten oder Dummy-Bursts DB verwendet.

Die weiteren drei Trägereinheiten C1 bis C3 sind zur Durchführung einer Synthesiser-Frequenzsprung-Implementierung ausgebildet, wobei jeder einzelnen Trägereinheit C1 bis C3 jeweils ein Trägerfrequenzband fa...fe von einer Anfangsfrequenz fa bis zu einer Endfrequenz fe zur Datenübertragung zugeordnet ist.

Im folgenden werden aus dem Trägerfrequenzband fa...fe drei Trägerfrequenzen f1, f2 und f3 für eine ausschließliche MBMS-Datenübertragung MBMS ausgewählt, die ebenfalls im Zeitschlitz TS5 im Downlink durchgeführt wird.

Mit Hilfe der Trägereinheiten CU1 bis CU3 werden Teilnehmerdaten TCH in Zeitschlitzen TS0 bis TS4 sowie TS6 und TS7 mit Hilfe des Frequenzsprungverfahrens übertragen, ohne jedoch dabei die ausschließlich der MBMS-Datenübertragung MBMS zugeordneten Trägerfrequenzen f1 bis f3 des Trägerfrequenzbandes fa...fe zu verwenden.

Nachfolgend wird eine erfindungsgemäße MBMS-Datenübertragung anhand von aufeinanderfolgenden Rahmen RA1 bis RA4 beschrieben.

Mit Hilfe der ersten Trägerfrequenz f0 der ersten Trägereinheit C0 wird in einem ersten Rahmen RA1 im Zeitschlitz TS5 die MBMS-Datenübertragung MBMS durchgeführt.

Mit Hilfe einer "Baseband-Frequency-Hopping"-Implementierung erfolgt eine MBMS-Datenübertragung MBMS im Zeitschlitz TS5 der weiteren Trägereinheiten C1 bis C3.

So wird beispielsweise während eines zweiten Rahmens RA2 der Zeitschlitz TS5 einer zugeordneten Trägerfrequenz f1 zur MBMS-Datenübertragung MBMS verwendet, wobei die Trägerfrequenz f1 von der Trägereinheit C1 zur Verfügung gestellt wird.

In einem dem zweiten Rahmen RA2 nachfolgenden dritten Rahmen RA3 wird der Zeitschlitz TS5 einer zugeordneten Trägerfrequenz f2 zur MBMS-Datenübertragung MBMS verwendet, wobei die Trägerfrequenz f2 von der Trägereinheit C2 zur Verfügung gestellt wird.

In einem dem dritten Rahmen RA3 nachfolgenden vierten Rahmen RA4 wird der Zeitschlitz TS5 einer zugeordneten Trägerfrequenz f3 zur MBMS-Datenübertragung MBMS verwendet, wobei die Trägerfrequenz f3 von der Trägereinheit C3 zur Verfügung gestellt wird.

Die BCCH-Datenübertragung BCCH mit Hilfe der ersten Trägerfrequenz f0 erfolgt für jeden Rahmen RA1 bis RA4 mit maximaler Leistung im ersten Zeitschlitz TS0, wobei zur Störsicherheit der BCCH-Datenanteil aufwändig kodiert übertragen wird.

Ebenso erfolgen die MBMS-Datenübertragungen MBMS mit maximaler Leistung, wobei jedoch bei der ersten Trägerfrequenz f0 auf eine aufwändige Kodierung verzichtet wird. Dadurch wird eine erhöhte MBMS-Datenübertragungsrate erreicht, die aufgrund des Frequenzsprüngverfahrens störunanfällig ist.

Das erfindungsgemäße Verfahren zur MBMS-Datenübertragung im Zeitschlitz TS5 wird mit Hilfe eines "Baseband-Frequency-Hopping"-Implementierung durchgeführt, wobei die MBMS-Basisbanddaten den verschiedenen Trägereinheiten Co bis C3 mit Hilfe eines Multiplexverfahrens zugeordnet werden.

Die Zeitschlitze TS0 bis TS4 und TS6 bis TS7 der Trägereinheiten C1 bis C3 stehen für die Übertragungen von Teilnehmerdaten TCH zur Verfügung, die mit Hilfe der "Synthesizer-Frequency-Hopping"-Implementierung durchgeführt wird.

Durch die Zuordnung der Trägerfrequenzen f1 bis f3 zur ausschließlichen MBMS-Datenübertragung ist eine optimierte Netzplanung mit entsprechend optimiertem Frequency-Reuse-Factor möglich. Interferenzen werden minimiert.

Dabei werden beispielsweise die Trägerfrequenzen f1 bis f3 durchwechselnd von den einzelnen Trägereinheiten C1 bis C3 zur Verfügung gestellt, wodurch beispielsweise die Trägerfrequenz f1 im ersten Rahmen RA1 von der Trägereinheit C1 und in einem weiteren Rahmen von einer der beiden weiteren Trägereinheiten C2 bzw. C3 zur Verfügung gestellt wird.

Neben der exklusiven Zuordnung der Trägerfrequenzen f1 bis f3 zur MBMS-Datenübertragung ist jedoch auch eine rahmenweise Änderung auf eine beliebige Trägerfrequenz des Trägerfrequenzbands fa...fe möglich.

Die nicht zur MBMS-Datenübertragung MBMS verwendeten Zeitschlitze TS5 können zur Übertragung von Teilnehmerdaten TCH oder weiterer MBMS-Daten im Rahmen der Baseband-Frequency-Hopping"-Implementierung verwendet werden.

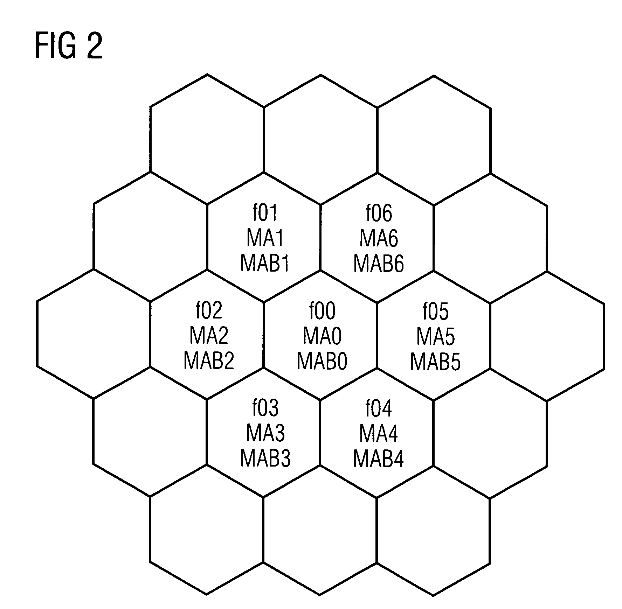

FIG 2 zeigt eine bezüglich der Interferenzen optimierte Trägerfrequenzzuteilung zu Funkzellen eines Mobilfunksystems zur Durchführung des erfindungsgemäßen Verfahrens.

Dabei beschreiben Trägerfrequenzen f00, f01, ..., f06 diejenigen Trägerfrequenzen, die zur BCCH-Datenübertragung und zur MBMS-Datenübertragung verwendet werden.

Diejenigen Trägerfrequenzen, die als Bestandteil eines Frequenzvorrats am Frequenzsprungverfahren teilnehmen, sind bei einem GSM-Mobilfunksystem unter dem Begriff "Mobile Allocation" gekennzeichnet.

Im folgenden gilt, dass mit 0≤x≤6 zur "Mobile Allocation" MAx zugeordnete Trägerfrequenzen mittels einer "Synthesizer-Frequency-Hopping"-Implementierung am Frequenzsprungverfahren teilnehmen, während zur "Mobile Allocation" MABx zugeordnete Trägerfrequenzen mittels einer "Baseband-Frequency-Hopping"-Implementierung am Frequenzsprungverfahren teilnehmen.

Die zur MBMS-Datenübertragung mitbenutzten Trägerfrequenzen f00 bis f06 sind zeitschlitzweise der "Mobile Allocation" MABX zugeordnet.

## Patentansprüche

1. Verfahren zur MBMS-Datenübertragung (MBMS) in einer Abwärtsstrecke von einer Basisstation zu Teilnehmern eines Funkkommunikationssystems mit Zeitschlitzvielfachzugriffsverfahren,
- bei dem zur Datenübertragung (BCCH,MBMS,TCH,DB) Zeitschlitze (TS0...TS7) eines periodisch wiederkehrenden Rahmens (RA1...RA4) einer zugeordneten Trägerfrequenz (f0...f3, fa...fe) verwendet werden,
- bei dem seitens der Basisstation (BTS) Systeminformationen (BCCH) mittels einer zugeordneten ersten Trägerfrequenz (f0) rundgesendet werden und den Systeminformationen (BCCH) ein erster Zeitschlitz (TS0) des periodisch wiederkehrenden Rahmens (RA1...RA4) exklusiv zugeordnet wird,
**dadurch gekennzeichnet,**
- **dass** zur MBMS-Datenübertragung (MBMS) verwendete Trägerfrequenzen mittels Frequenzsprungverfahren rahmenweise wechselnd verändert werden, und
- **dass** zur MBMS-Datenübertragung (MBMS) rahmenweise wechselnd ein zweiter Zeitschlitz (TS5) der ersten Trägerfrequenz (f0) und der zweite Zeitschlitz (TS5) von mindestens einer weiteren Trägerfrequenz (f1, f2, f3) verwendet wird.

2. Verfahren nach Anspruch 1, **dadurch gekennzeichnet, dass** die MBMS-Datenübertragung (MBMS) und die Systeminformationsübertragung (BCCH) mit einer vorbestimmten maximalen Leistung im Rahmen einer Punkt-zu-Multipunktverbindung durchgeführt werden.

3. Verfahren nach Anspruch 1 oder 2, **dadurch gekennzeichnet, dass** die erste Trägerfrequenz (f0) von einer ersten Trägereinheit (C0) und jede weitere Trägerfrequenz (f1, f2, f3) von jeweils einer weiteren Trägereinheit (C1, C2, C3) zur Verfügung gestellt wird, wobei die weiteren Trägereinheiten als Synthesizer-Frequenzsprung-Implementierung ausgebildet sind.

4. Verfahren nach Anspruch 3, **dadurch gekennzeichnet, dass** die erste Trägerfrequenz (f0) und die weiteren Trägerfrequenzen (f1, f2, f3) durch ein zyklisches Frequenzsprungverfahren derart geändert werden, dass bei einer vorbestimmten Frequenzabfolge zu jedem Zeitpunkt die erste Trägerfrequenz (f0) aktiv ist.

5. Verfahren nach einem der vorhergehenden Ansprüche, **dadurch gekennzeichnet, dass** die weiteren Trägerfrequenzen (f1...f3) zur ausschließlichen MBMS-Datenübertragung verwendet werden.

6. Verfahren nach einem der vorhergehenden Ansprüche, **dadurch gekennzeichnet, dass** das Frequenzsprungverfahren und die Zuteilung der MBMS-Datenübertragung zu einzelnen Zeitschlitzen mittels einer kombinierten Basisband-Frequenzsprung-Implementierung mit einer Synthesizer-Frequenzsprung-Implementierung durchgeführt wird.

7. Verfahren nach einem der vorhergehenden Ansprüche, **dadurch gekennzeichnet, dass** als Funkkommunikationssystem ein GSM/GERAN-Mobilfunksystem verwendet wird.

8. Verfahren nach Anspruch 7, **dadurch gekennzeichnet, dass** der erste Zeitschlitz (TS0) der ersten Trägerfrequenz (f0) zur BCCH-Datenübertragung verwendet wird.

9. Verfahren nach einem der vorhergehenden Ansprüche, **dadurch gekennzeichnet, dass** zur Teilnehmerdatenübertragung (TCH) ausschließlich Zeitschlitze der weiteren Trägerfrequenzen im Rahmen eines Synthesizer-Frequenzsprungverfahrens verwendet werden.

10. Basisstation zur Durchführung des Verfahrens nach einem der vorhergehenden Ansprüche, **dadurch gekennzeichnet,**
- **dass** in der Basisstation eine erste Trägereinheit (C0) zur Bildung einer ersten Trägerfrequenz (f0) vorgesehen ist, mit deren Hilfe sowohl Systeminformationen (BCCH) als auch ein MBMS-Datendienst in Abwärtsrichtung übertragen werden,
- **dass** in der Basisstation mindestens eine weitere Trägereinheit (C1, C2, C3) zur Bildung mindestens einer weiteren Trägerfrequenz (f1...f3) vorgesehen ist, und
- **dass** die erste Trägereinheit (C0) und die mindestens eine weitere Trägereinheit (C1...C3) derart ausgebildet sind, dass der MBMS-Datendienst in einem zugeordneten Zeitschlitz (TS5) im Frequenzsprungverfahren rahmenweise wechselnd durch die erste und die mindestens eine weitere Trägerfrequenz (f1...f3) übertragen wird.
